# EUROPEAN PATENT SPECIFICATION

(11) **EP 1 712 340 B1**
(45) Date of publication and mention of the grant of the patent: **29.02.2012**
(21) Application number: 06380080.9
(22) Date of filing: 11.04.2006
(51) Int. Cl.: B29C 43/40, B29C 43/18

(54) **Cutting device for a moulding device**
Schneidwerkzeug für eine Werkzeuform
Outil de coupe pour un dispositif de moulage

(30) Priority: 15.04.2005 ES 200500913
(43) Date of publication of application: 18.10.2006
(73) Proprietor: Möllertech Orense, S.L., 32710 Pereiro de Aguiar (Orense) (ES)
(72) Inventor: González López, Alberto c/o Möllertech, S.A., 32710 Pereiro de Aguiar (Orense) (ES)
(74) Representative: Flaccus, Rolf-Dieter

(56) References cited:
- US-A- 5 474 728
- US-A1- 2002 162 213
- US-A1- 2003 124 305
- PATENT ABSTRACTS OF JAPAN vol. 2003, no. 12, 5 December 2003 (2003-12-05) & JP 2004 276280 A (ARACO CORP), 7 October 2004 (2004-10-07)

## Description

### PURPOSE OF THE INVENTION

This invention refers to a device and a method for cutting decorative elements as defined in the preamble of claims 1 and 5.

### FIELD OF THE INVENTION

The field is manufacturing of plastic material parts and pieces that have a decorative function and also, as the case may be, a utilitarian function, and that are used in the shaping and finish of different structures such as car interiors, furniture, ornamental objects and similar.

### BACKGROUND OF THE INVENTION

In applications pertaining to sectors included in the field of the invention, pieces and parts are used for aesthetic finishing purposes that should be properly installed and supported.

The elements in question usually consist of a supporting part made, for example, of plastic material and which will be hidden after the element is installed in the place of use, and a decorative part made of material such as fabric, a non-fabric material or a layer of ornamental material with suitable aesthetic properties.

Currently, the above mentioned elements are cut in a series of operations that require a considerable amount of time and labor, apart from the fact that the precision and uniformity of the sizing and finish of the pieces obtained are often deficient. Thus a system was needed to perform this task under better operating conditions and with better results.

US-A-5474728 relates to a mold apparatus forming a thermoplastic container with openings. The openings are created by the engagement between a fixed shear key mounted in a first mold member and a movable shear key which has a flat trapezoidally-shaped cutting surface and is mounted in a second mold member. The movable key travels along an inclined path as the mold members close on a preheated thermoplastic sheet.

US-A-2003124305 discloses a mold apparatus for molded wood strand with hole punches. The hole punches each comprise a base and a funnel shaped hole-defining portion.

### BRIEF DESCRIPTION OF THE INVENTION

The objective of the invention is achieved by the device according to claim 1 and the method according to claim 5. An alternative solution is defined in claim 2.

The device to be described is intended to appropriately execute the cutting of layers or plates of the raw material (semi-processed) mentioned above, and which will result in formation of the elements according to specified shapes and sizes.

A typical, although not the only, application for use of the decorative elements made according to this invention is the finishing of different parts on the interior of automobiles, e.g. on the instrument panel, doors and similar.

The device includes an active part, which we will call male piece, and a passive part forming a cavity, along with a cutting mechanism formed by a sharp element and a serviceable base. These parts can functionally occupy different relative positions, depending on the shape and size of the materials to be cut.

To facilitate the explanation, this description is accompanied by some drawings that show, by way of an illustrative, non-limitative example, an execution of a cutting device for decorative elements in molding, according to the principles of the claims.

### BRIEF DESCRIPTION OF THE DRAWINGS

Figure 1 shows an enlarged detail of the cutting zone, in which the sharp cutting element corresponds to the cavity and the serviceable base to the male piece, and Figure 2 shows an inverted arrangement of these components.
Figure 3 shows the use of a counter-projecting movable component that precisely acts on the cutting zone.

### DETAILED DESCRIPTION OF THE INVENTION

The elements designated with numbers in the drawings correspond to the parts indicated below.

The male piece 1 of the device normally includes recessed or projecting curvilinear parts 2 and flat parts 3.

Cavity 4 acts as a female or passive piece and includes curved parts 5 and flat parts 6, corresponding to the above mentioned parts of male piece 1.

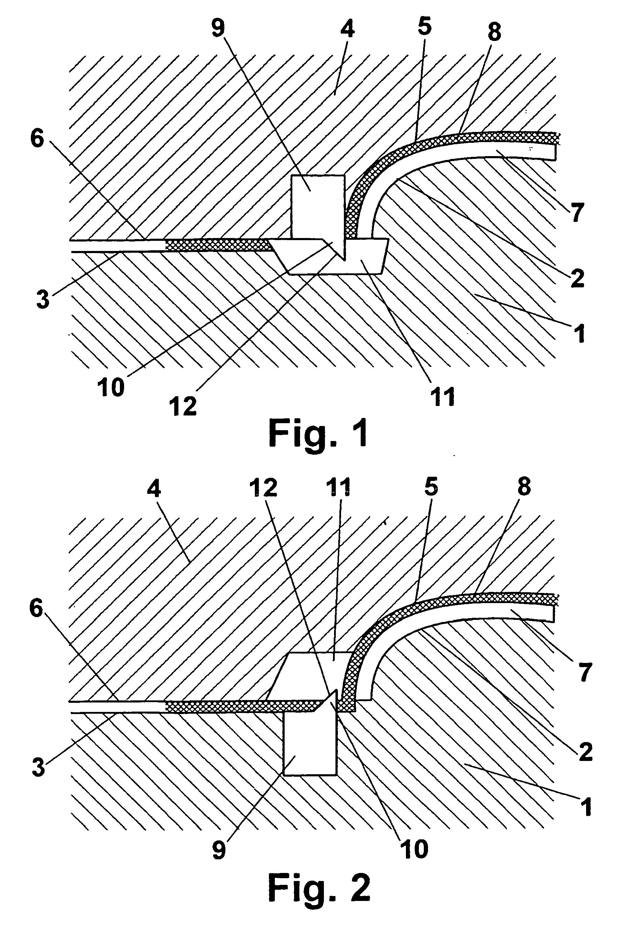

In the illustrated case, figures 1 and 2, these are elements formed by a plastic laminar section 7 (which will be hidden) and by a decorative coating 8 (which will be visible).

The cut is executed by element 9, which has a cutting edge 10 and the serviceable base 11 provided with a recess 12 with the same section shape as cutting edge 10.

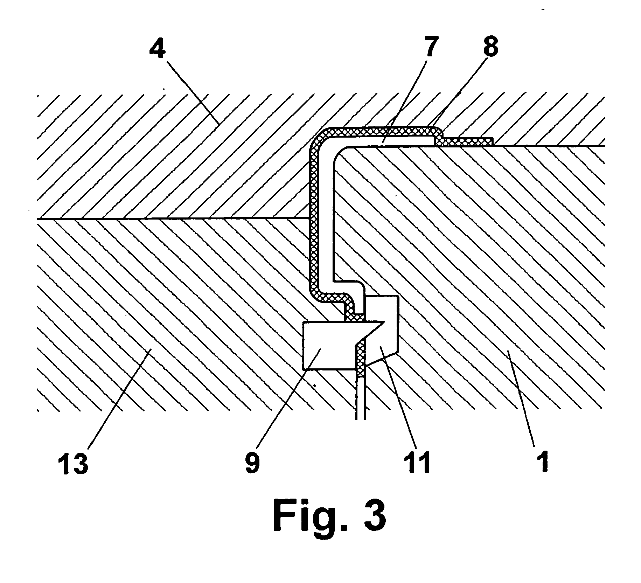

Figure 3 shows the movable component 13, which has the sharp element 9 that is now not integral with cavity 4 and which can move parallel to itself to alternatively make way for the composite material to be cut and the sharp element, respectively.

## Claims

1. Device for cutting of decorative elements, intended for the shaping of pieces based on layered material composed of a support and at least one ornamental element with finish properties, **characterized by** the fact that the device includes a male piece (1) consisting of curvilinear (2) and rectilinear (3) parts, and a female piece (4), including curved parts (5) and flat parts (6) corresponding to the curvilinear and rectilinear parts of the male piece (1), wherein one of the pieces (1, 4) is provided with a sharp element (9), which has a cutting edge (10) and the other piece (4, 1) is provided with a bucking bar (11) that is provided with a recess (12) having the same section shape as said cutting edge (10).

2. Device for cutting of decorative elements, intended for the shaping of pieces based on layered material composed of a support and at least one ornamental element with finish properties, **characterized by** the fact that the device includes a male piece (1) consisting of curvilinear (2) and rectilinear (3) parts, a female piece (4), including curved parts (5) and flat parts (6) corresponding to the curvilinear and rectilinear parts of the male piece (1) and a movable component 13, wherein the movable component 13 is provided with a sharp element (9), which has a cutting edge (10) and the male piece (1) is provided with a bucking bar (11) that is provided with a recess (12) having the same section shape as said cutting edge (10).

3. Use of a device according to any one of the preceding claims to cut different structures such as car interiors, furniture, ornamental objects and similar.

4. Use according to claim 3, **characterized in that** said structures are elements formed by a plastic laminar section (7) and by a decorative coating (8).

5. Method for cutting of plastic material parts and pieces that have a decorative function **characterized in** the following steps:
- inserting a supporting part, preferably made from plastic material, and a decorative part, preferably made from material selected from the group comprising fabric, a non-fabric material or a layer of ornamental material with suitable aesthetic properties, in a device according to any one of the claims 1 and 2,
- pressing said pieces (1, 4, 13) together, thereby executing the cut by intersection of the sharp element (9) and the bucking bar (11).

## Patentansprüche

1. Vorrichtung zum Schneiden dekorativer Elemente, zur Formgebung von Schichtmaterialteilen, die eine Halterung und zumindest ein Zierelement mit Feinbearbeitung aufweist, **dadurch gekennzeichnet, dass** die Vorrichtung (1) ein Vaterteil (1) aufweist, das aus bogenförmigen (2) und geradlinigen (3) Teilen besteht, und ein Mutterteil (4), das bogenförmige (5) und flache (6) Teile aufweist, welche den bogenförmigen und geradlinigen Teilen des Vaterteils (1) entsprechen, wobei eines der Stücke (1,4) mit einem scharfen Element (9) mit Schneidkante (10) versehen ist und das andere Stück (4,1) einen Gegenhalter (11) aufweist, der einen Hohlraum (12) mit derselben Querschnittsform wie die besagte Schneidkante (10) aufweist.

2. Vorrichtung zum Schneiden dekorativer Elemente, zur Formgebung von Schichtmaterialteilen, die eine Halterung und zumindest ein Zierelement mit Feinbearbeitung aufweist, **dadurch gekennzeichnet, dass** die Vorrichtung (1) ein Vaterteil (1) aufweist, das aus bogenförmigen (2) und geradlinigen (3) Teilen besteht, ein Mutterteil (4), das bogenförmige (5) und flache (6) Teile aufweist, welche den bogenförmigen und geradlinigen Teilen des Vaterteils (1) entsprechen, sowie eine bewegliche Komponente 13, wobei die bewegliche Komponente 13 mit einem scharfen Element (9) mit Schneidkante (10) versehen ist und das Vaterteil (1) einen Gegenhalter (11) aufweist, der einen Hohlraum (12) mit derselben Querschnittsform wie die besagte Schneidkante (10) aufweist.

3. Gebrauch einer Vorrichtung gemäss einem der vorangehenden Ansprüche zum Schneiden verschiedener Strukturen wie Autoinnenverkleidungen, Möbel, Zierobjekte und ähnliche.

4. Gebrauch einer Vorrichtung gemäss des Anspruches 3, **dadurch gekennzeichnet, dass** die besagten Strukturen aus einem laminaren Kunststoffabschnitt (7) und aus einer dekorativen Beschichtung (8) bestehen.

5. Verfahren zum Schneiden von Plastikstücken und -teilen mit einer Dekorfunktion, **gekennzeichnet durch** folgende Schritte:
- Einlegen eines Halteelements, vorzugsweise aus Kunststoff, und eines dekorativen Elements, vorzugsweise aus einem Material aus der Gruppe der Textilien, Nichttextilien oder einer Schicht von Ziermaterial, mit den geeigneten ästhetischen Eigenschaften, in einer Vorrichtung gemäss einem der Ansprüche 1 und 2,
- Zusammenpressen der genannten Teile (1,4,13) und Ausführen des Schnittes **durch** Kreuzung des scharfen Elements (9) und des Gegenhalters (11).

## Revendications

1. Dispositif pour le coupage d'éléments décoratifs, destiné au moulage de pièces basées sur du matériel en couches, composé d'un support et pour le moins d'un élément décoratif avec des propriétés de finition, **caractérisé en ce que** le dispositif comprend une pièce mâle (1) composé de parties curvilignes (2) et rectilignes (3), et une pièce femelle (4), incluyant des parties courbes (5) et des parties plates (6) qui correspondent aux parties curvilignes et rectilignes de la pièce mâle (1), dans lequel une des pièces (1,4) est pourvue d'un élément aigu (9) qui dispose d'un bord tranchant (10) et l'autre pièce (4,1) est pourvue d'une sous-étampe (11) qui présente une cavité (12) avec la même forme de section que ledit bord tranchant (10).

2. Dispositif pour le coupage d'éléments décoratifs, destiné au moulage de pièces basées sur du matériel en couches, composé d'un support et pour le moins d'un élément décoratif avec des propriétés de finition, **caractérisé en ce que** le dispositif comprend une pièce mâle (1) composé de parties curvilignes (2) et rectilignes (3), et une pièce femelle (4), incluyant des parties courbes (5) et des parties plates (6) qui correspondent aux parties curvilignes et rectilignes de la pièce mâle (1), et un élément mobile 13,
dans lequel l'élément mobile 13 est pourvu d'un élément aigu (9) qui dispose d'un bord tranchant (10) et la pièce mâle (1) est pourvue d'une cavité (12) avec la même forme de section que ledit bord tranchant (10).

3. Usage d'un dispositif suivant l'une quelconque des revendications précédentes, pour le coupage de structures différentes comme les intérieurs de voiture, meubles, objets décoratifs et similaires.

4. Usage suivant la revendication 3, **caractérisé en ce que** ces structures sont des éléments formés par une section laminaire de plastique (7) et par un revêtement décoratif (8).

5. Méthode pour couper des parties et pièces de matière plastique possédant une fonction décorative, **caractérisée par** les étapes suivantes:
- inserter une partie de support, de préférence faite de matière plastique, et une partie décorative, de préférence choisie parmi le groupe qui comprend les tissus, les matières non tissues, ou une couche de matériel décoratif avec des propriétés esthétiques convenables, dans un dispositif suivant une des revendications 1 et 2,
- en pressant lesdites pièces (1,4,13) ensemble, réaliser le coupage par l'intersection de l'élément aigu (9) et la sous-étampe (11).
